# EUROPEAN PATENT SPECIFICATION

(11) **EP 2 648 130 B1**
(45) Date of publication and mention of the grant of the patent: **15.06.2016**
(21) Application number: 11853780.2
(22) Date of filing: 02.04.2011
(51) Int. Cl.: G06F 9/44, G06F 21/35, H04M 1/67

(54) **METHOD AND TERMINAL FOR LOCKING/UNLOCKING SCREEN OF TERMINAL BASED ON RFID**
VERFAHREN UND ENDGERÄT ZUM VERRIEGELN/ENTRIEGELN EINES ENDGERÄTEBILDSCHIRMS AUF RFID-BASIS
PROCÉDÉ ET TERMINAL POUR VERROUILLER/DÉVERROUILLER UN ÉCRAN DE TERMINAL SUR LA BASE D'UNE RFID

(30) Priority: 28.12.2010 CN 201010609714
(43) Date of publication of application: 09.10.2013
(73) Proprietor: ZTE Corporation, Shenzhen, Guangdong 518057 (CN)
(72) Inventor: FANG, Wen, Shenzhen Guangdong 518057 (CN); LIU, Yang, Shenzhen Guangdong 518057 (CN)
(74) Representative: Tischner, Oliver
(86) International application number: PCT/CN2011/072428
(87) International publication number: WO 2012/088804

(56) References cited:
- CN-A- 1 834 857
- CN-A- 101 021 762
- CN-A- 101 893 994
- US-A1- 2005 221 798
- US-A1- 2006 009 196

## Description

### TECHNICAL FIELD

The disclosure relates to the field of mobile communications, and in particular to a method and a terminal for locking/unlocking a screen of a terminal based on Radio Frequency Identification (RFID).

### BACKGROUND

With the growing popularity of mobile phone terminals, the screen unlocking method for a mobile phone becomes more and more diversified in recent years. From the earliest keypad-based mobile phone which is unlocked through key combination to the present touch-screen mobile phone, multiple unlocking methods are developed out gradually, such as, touching along a fixed trace, moving an unlocking element towards a target area and filling blank areas; besides, there is also a method for locking a mobile phone based on human characteristics, for example, locking a mobile phone through the identification of characteristics such as human face, fingerprint and voice also becomes an existing technology and is known by public.

At present, the development purpose of the screen unlocking method is to reduce the probability of error unlocking, improve privacy and security during an unlocking process and improve user's happiness in an unlocking operation. However, the user's happiness is low in common contact-type unlocking methods of the conventional mobile phone unlocking technology; in addition, a mobile phone can be unlocked by any person in most of existing mobile phone screen unlocking methods; and the user can not decide on his/her own that the mobile phone screen is unlocked by the user himself/herself only. Thus, low security is caused during the use of mobile phone.

RFID is a technology that implements short distance transmission of information through inductive electromagnetic coupling. The structure of a corresponding RFID apparatus includes a reader and an electronic tag. The reader transmits out a radio-frequency signal of a specific frequency continuously through an antenna, so that a driving electromagnetic field is formed in a certain range of the reader. When the electronic tag enters the electromagnetic field, the electronic tag is evoked to generate an induced current and acquires energy from the induced current to send out the information stored in the electronic tag. Then, the reader reads the information through the antenna, decodes the information and performs corresponding communication process.

The application frequency of the RFID technology is extensive, from low-frequency 125KHz to high-frequency 5.8GHz. The Bus card is one example of this technology.

The RFID is a one-way data transmission technology. If two parties both have a reader and an electronic tag, the one-way data transmission becomes a two-way data transmission, that is, Near Field Communication (NFC). At present, the application of NFC on mobile phone includes a pasting card scheme, a Smart Mobile Application Platform (SMAP) scheme and a Radio Frequency Subscriber Identity Module (RF-SIM) scheme. In the RF-SIM scheme, the working frequency is 2.4GHz, no external antenna is needed, and a mobile phone can work just when provided with a corresponding SIM card in the condition that the mobile phone supplies sufficient power to the SIM card.

At present, the technology of locking/unlocking the screen of a mobile phone through RFID is a scheme to be further studied and developed.

US 2006/0009196 discusses a system for preventing unauthorized use of a mobile phone.

### SUMMARY

The main purpose of the disclosure is to provide a method and a terminal for locking/unlocking a screen of a terminal based on RFID, so as to improve the user experience of locking/unlocking terminal screen and the security of terminal in use.

In order to achieve the purpose above, the disclosure provides a method for locking/unlocking a screen of a terminal based on RFID, as recited in claim 1.

The disclosure also provides a terminal for locking/unlocking a screen of the terminal based on RFID, as recited in claim 5.

With the method and the terminal provided by the disclosure for locking/unlocking a screen of a terminal based on RFID, screen locking/unlocking is implemented through authentication by making an external electronic tag cooperating with an RFID reader in the terminal (for example, a mobile phone). Thus, on one aspect, the security of terminal in use is improved; once a user locks a screen of a terminal using her/his own electronic tag, the screen can be unlocked through the user's own electronic tag only; therefore, the possibility of privacy leaking is greatly reduced; on another aspect, the electronic tag can be arranged on a personal article of the user, such as a ring, a bracelet and the like; when unlocking the screen, the user only needs to wave the hand in front of the terminal to automatically light and turn on the screen, therefore, the user experience of locking/unlocking terminal screen is improved.

### BRIEF DESCRIPTION OF THE DRAWINGS

Fig. 1 shows a flowchart of one embodiment of a method for locking/unlocking a screen of a terminal based on RFID in the disclosure;
Fig. 2 shows a flowchart for locking/unlocking a screen of a terminal according to locking/unlocking information in one embodiment of the method for locking/unlocking the screen of the terminal based on RFID in the disclosure;
Fig. 3 shows a structure diagram of one embodiment of a terminal for locking/unlocking a screen of a terminal based on RFID in the disclosure; and
Fig. 4 shows a structure diagram of a locking/unlocking module in one embodiment of the terminal for locking/unlocking a screen of a terminal based on RFID in the disclosure.

### DETAILED DESCRIPTION

The solution according to the embodiments of the disclosure mainly is to lock/unlock a screen of a terminal through an authentication by making an external electronic tag cooperate with an RFID reader in the terminal, so as to improve the security of terminal in use and the user experience.

The implementation of the disclosure requires a terminal to support an NFC function or at least support an RFID reader function in hardware. In the following embodiments, the technical scheme of the disclosure is illustrated in detail by taking a mobile phone terminal having the RFID reader function as an example.

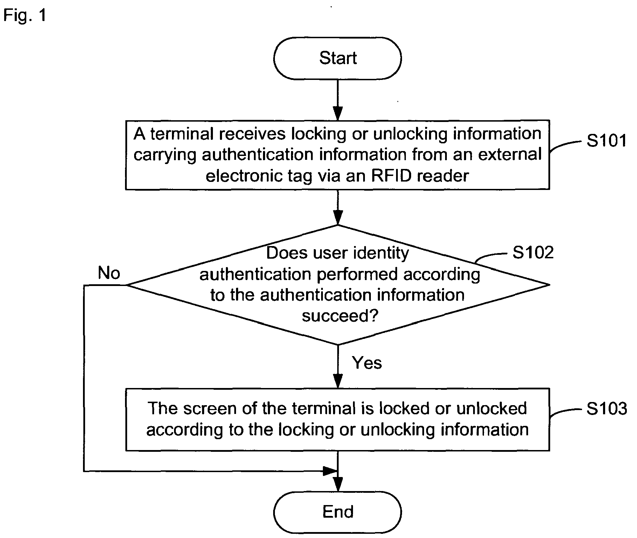

As shown in Fig. 1, one embodiment of the disclosure provides a method for locking/unlocking a screen of a terminal based on RFID, which includes the following steps.

Step S101: the terminal receives locking or unlocking information carrying authentication information from an external electronic tag via an RFID reader.

Taking a mobile phone as an example, in this embodiment, the RFID reader is arranged in the mobile phone and the electronic tag is separated from the mobile phone, wherein the electronic tag can be manufactured to be carried by a user, for example, integrated into a plastic ring, a bracelet, a key ring, a necklace pendant or a mobile phone pendant.

The electronic tag should have two different modes, namely, locking mode and unlocking mode, or, one same electronic tag can send two kinds of information, namely, screen locking information and screen unlocking information, to the mobile phone through a physical bidirectional switching mode according to user requirements.

When the electronic tag passes through an electromagnetic field emitted by the RFID reader, the electronic tag is evoked to send locking information or unlocking information to the RFID reader; then, the RFID reader performs corresponding processing according to the received locking information or unlocking information.

In this embodiment, the electronic tag should also send authentication information, besides sending the locking information and unlocking information, that is to say, it is needed to guarantee that only the electronic tag of the user himself/herself can lock or unlock the screen of the user's mobile phone.

Therefore, the locking information or unlocking information sent by the electronic tag needs to carry the authentication information used for performing user identity authentication.

The technology of writing information into the electronic tag can adopt an existing mature method, and no further description is needed here.

Step S102: user identity authentication is performed according to the authentication information; if the authentication succeeds, Step S103 is executed; otherwise, the process ends.

The authentication information of the user is stored in the mobile phone in advance; when the mobile phone receives the locking or unlocking information sent from the electronic tag, the mobile phone determines whether the authentication information carried in the locking or unlocking information is consistent with the user authentication information stored in the mobile phone; if so, it is determined that the authentication succeeds; otherwise, it is determined that the authentication fails.

Step S103: the screen of the terminal is locked or unlocked according to the locking or unlocking information.

After the authentication succeeds, the mobile phone locks or unlocks the screen according to the current status of the screen.

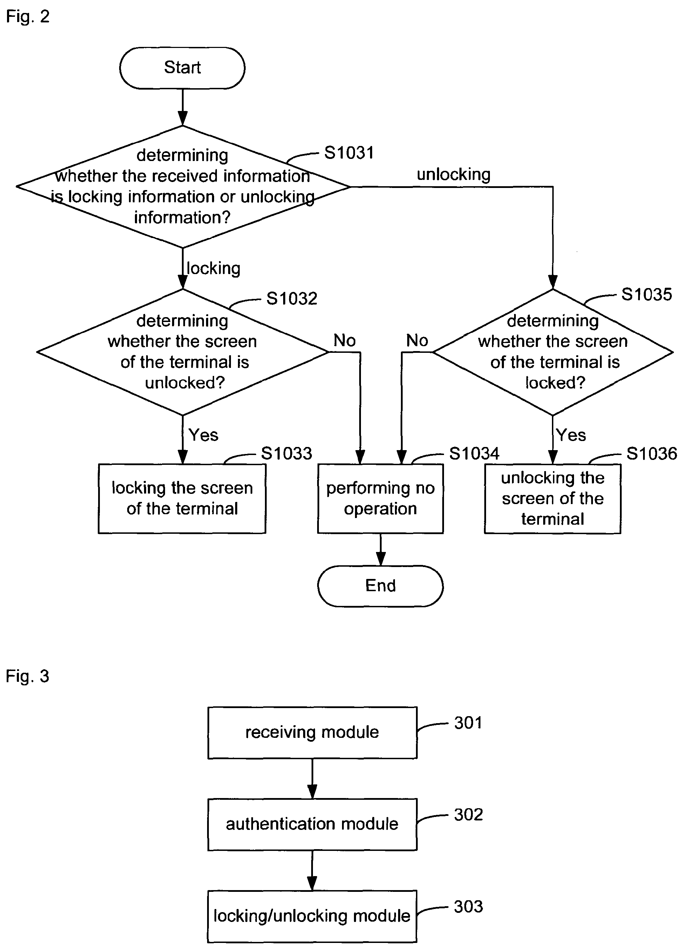

As shown in Fig. 2, Step S103 includes the following steps:
Step S1031: determining whether the received information is locking information or unlocking information; if the received information is locking information, entering Step S1032; otherwise, entering Step S1035;
Step S1032: determining whether the screen of the terminal is unlocked; if so, entering Step S1033; otherwise, entering Step S1034;
Step S1033: locking the screen of the terminal;
Step S1034: performing no operation;
Step S1035: determining whether the screen of the terminal is locked; if so, entering Step S1036; otherwise, entering Step S1034;
Step S1036: unlocking the screen of the terminal.

Hereinafter, the locking or unlocking operation performed on the mobile phone screen is described in detail by taking the electronic tag being integrated into a ring of a user for example.

The RFID reader embedded in the mobile phone can emit an electromagnetic field to vicinity, and can receive the unlocking information or locking information sent from the electronic tag.

If the current mode of the mobile phone screen is locked and the user selects the unlocking mode of electronic tag, when the hand of the user wearing the ring waves from in front of the mobile phone, the electronic tag in the ring enters the electromagnetic field emitted by the RFID reader of the mobile phone and is evoked by the electromagnetic field to send out an unlocking signal, that is, to send unlocking information to the RFID reader; after the RFID reader receives the unlocking information, the RFID performs user identity authentication and specifically determines whether the authentication information carried in the unlocking information is consistent with an authentication code stored in the mobile phone in advance; after determining that the authentication succeeds and the unlocking information is correct, the RFID reader executes an unlocking action for the mobile phone screen.

If the current mode of the mobile phone screen is unlocked and the user selects the locking mode of electronic tag, when the hand of the user wearing the ring waves from in front of the mobile phone, the electronic tag in the ring enters the electromagnetic field emitted by the RFID reader of the mobile phone and is evoked by the electromagnetic field to send out a locking signal, that is, to send locking information to the RFID reader; after the RFID reader receives the locking information, the RFID performs user identity authentication and specifically determines whether the authentication information carried in the unlocking information is consistent with an authentication code stored in the mobile phone in advance; after determining that the authentication succeeds and the locking information is correct, the RFID reader executes a locking action for the mobile phone screen.

It should be noted that the electronic tag in this embodiment should have two different functions, namely, sending locking information and sending unlocking information, therefore, one electronic tag may include a first electronic tag configured to send the locking information, a second electronic tag configured to send the unlocking information, and a shielding part configured to switch the functions of the first and second electronic tags. While the first electronic tag is used, the electromagnetic field in the vicinity of the second electronic tag can be shielded through the shielding part, so that the second electronic tag does not function and the first electronic tag functions only, and vice versa. In actual application, the user only needs to shift the shielding part to a different position to control the electronic tag to enter the locking mode or unlocking mode.

In this embodiment, screen locking/unlocking is implemented through an authentication by making the external electronic tag cooperated with the RFID reader in the mobile phone; thus, the security of mobile phone in use can be improved first; once a user locks a mobile phone screen using her/his own electronic tag, the screen can be unlocked through the user's own electronic tag only, therefore, the possibility of privacy leaking is greatly reduced; further, the user experience of locking/unlocking mobile phone screen is improved, for example, if the user integrates the electronic tag into a ring, then, the user only needs to wave the hand wearing the ring in front of the mobile phone to automatically light the screen of the mobile phone and thus to turn on the screen of the mobile phone.

As shown in Fig. 3, one embodiment of the disclosure provides a terminal for locking/unlocking a screen of a terminal based on RFID, which includes a receiving module 301, an authentication module 302 and a locking/unlocking module 303, wherein
the receiving module 301 is configured to receive, via an RFID reader, locking or unlocking information carrying authentication information from an external electronic tag.

Taking a mobile phone as an example, in this embodiment, the RFID reader is arranged in the mobile phone and the electronic tag is separated from the mobile phone, wherein the electronic tag can be manufactured to be carried by a user, for example, integrated into a plastic ring, a bracelet, a key ring, a necklace pendant or a mobile phone pendant.

The electronic tag should have two different modes, namely, locking mode and unlocking mode, or, one same electronic tag can send two kinds of information, namely, screen locking information and screen unlocking information, to the mobile phone through a physical bidirectional switching mode according to user requirements.

When the electronic tag passes through an electromagnetic field emitted by the RFID reader, the electronic tag is evoked to send the locking information or unlocking information to the RFID reader; then, the RFID reader performs corresponding processing according to the received locking information or unlocking information.

In this embodiment, the electronic tag should also send authentication information, besides sending the locking information and unlocking information, that is to say, it is needed to guarantee that only the electronic tag of the user himself/herself can lock or unlock the screen of the user's mobile phone.

Therefore, the locking information or unlocking information sent by the electronic tag needs to carry the authentication information used for performing user identity authentication.

The technology of writing information into the electronic tag can adopt an existing mature method, and no further description is needed here.

The authentication module 302 is configured to perform user identity authentication according to the authentication information, and specifically to:
determine whether the authentication information is consistent with the user authentication information stored in the terminal; if so, determine that the authentication succeeds; otherwise, determine that the authentication fails.

The authentication information of the user is stored in the mobile phone in advance; when the receiving module 301 of the mobile phone receives the locking or unlocking information sent from the electronic tag, it is determined through the authentication module 32 whether the authentication information carried in the locking or unlocking information is consistent with the user authentication information stored in the mobile phone; if so, it is determined that the authentication succeeds; otherwise, it is determined that the authentication fails.

The locking/unlocking module 303 is configured to lock or unlock the screen of the terminal according to the locking or unlocking information after the authentication succeeds.

After the authentication succeeds, the locking/unlocking module 303 of the mobile phone locks or unlocks the screen according to the current status of the screen.

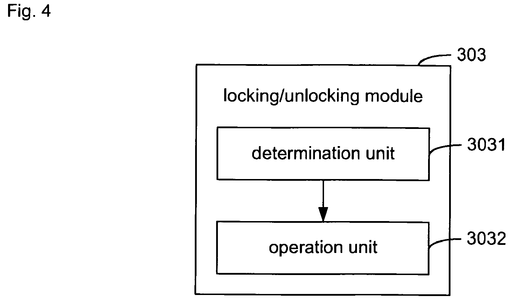

As shown in Fig. 4, the locking/unlocking module 303 includes a determination unit 3031 and an operation unit 3032, wherein
the determination unit 3031 is configured to determine whether the screen of the terminal is unlocked when information received from the electronic tag is locking information; and
the operation unit 3032 is configured to lock the screen of the terminal if the screen of the terminal is unlocked and to perform no operation when the screen of the terminal is locked.

Further, the determination unit 3031 is further configured to determine whether the screen of the terminal is locked when the information received from the electronic tag is unlocking information; and
the operation unit 3032 is further configured to unlock the screen of the terminal when the screen of the terminal is locked and to perform no operation when the screen of the terminal is unlocked.

It should be noted that the electronic tag in this embodiment should have two different functions, namely, sending locking information and sending unlocking information; therefore, one electronic tag may include a first electronic tag configured to send the locking information, a second electronic tag configured to send the unlocking information, and a shielding part configured to switch the functions of the first and second electronic tags. While the first electronic tag is used, the electromagnetic field in the vicinity of the second electronic tag can be shielded through the shielding part, so that the second electronic tag does not function and the first electronic tag functions only, and vice versa. In actual application, the user only needs to shift the shielding part to a different position to control the electronic tag to enter the locking mode or unlocking mode.

In the embodiment of the disclosure, with the method and the terminal for locking/unlocking a screen of a terminal based on RFID, screen locking/unlocking is implemented through an authentication by making the external electronic tag cooperate with the RFID reader in the terminal (for example, a mobile phone). Thus, on one aspect, the security of terminal in use is improved; once a user locks a screen of a terminal using her/his own electronic tag, the screen can be unlocked through the user's own electronic tag only, therefore, the possibility of privacy leaking is greatly reduced; on another aspect, the electronic tag can be arranged on a personal article of the user, such as a ring, a bracelet and the like; when unlocking the screen, the user only needs to wave the hand in front of the terminal to automatically light and turn on the screen, therefore, the user experience of locking/unlocking terminal screen is improved. In addition, the screen locking/unlocking method of the disclosure is not only applicable to mobile phones, but also applicable to other terminals having a screen locking/unlocking function, such as a Personal Computer (PC), and a Personal Digital Assistant (PDA).

The above are only the preferred embodiments of the disclosure and are not intended to limit the patent scope of the disclosure. Any equivalent structures or equivalent flow modifications made according to the description and the accompanying drawings of the disclosure and applied in other relevant technical fields directly or indirectly are deemed to be included in the patent protection scope of the disclosure.

## Claims

1. A method for locking/unlocking a screen of a terminal based on Radio Frequency Identification, RFID, comprising:
Receiving (101), by the terminal, via an RFID reader, locking or unlocking information carrying authentication information sent by an external electronic tag;
performing (102) user identity authentication according to the authentication information; and
locking or unlocking (103) the screen of the terminal according to the locking or unlocking information, after the authentication succeeds;
**characterized in that**,
the external electronic tag comprises a first electronic tag configured to send the locking information, a second electronic tag configured to send the unlocking information, and a shielding part configured to switch functions of the first and second electronic tags; wherein the shielding part is specifically configured to shield an electromagnetic field in the vicinity of the first electronic tag when the second electronic tag is used, or shield an electromagnetic field in the vicinity of the second electronic tag when the first electronic tag is used, so that only one of the first and second electronic tags functions.

2. The method according to claim 1, wherein the step of performing user identity authentication according to the authentication information comprises:
determining whether the authentication information is consistent with user authentication information stored in the terminal; if so, determining that the authentication succeeds; otherwise, determining that the authentication fails.

3. The method according to claim 1, wherein the step of locking or unlocking the screen of the terminal according to the locking or unlocking information comprises:
when information received from the electronic tag is locking information, determining whether the screen of the terminal is unlocked;
if unlocked, then locking the screen of the terminal; otherwise, performing no operation.

4. The method according to claim 1, wherein the step of locking or unlocking the screen of the terminal according to the locking or unlocking information comprises:
when information received from the electronic tag is unlocking information, then determining whether the screen of the terminal is locked;
if locked, then unlocking the screen of the terminal; otherwise, performing no operation.

5. A terminal for locking/unlocking a screen of the terminal based on Radio Frequency Identification, RFID, comprising:
a receiving module(301), which is configured to receive, via an RFID reader, locking or unlocking information carrying authentication information from an external electronic tag;
an authentication module(302), which is configured to perform user identity authentication according to the authentication information; and
a locking/unlocking module(303), which is configured to lock or unlock the screen of the terminal according to the locking or unlocking information after the authentication of the authentication module succeeds;
**characterized in that**,
the external electronic tag comprises a first electronic tag configured to send the locking information, a second electronic tag configured to send the unlocking information, and a shielding part configured to switch functions of the first and second electronic tags; wherein the shielding part is specifically configured to shield an electromagnetic field in the vicinity of the first electronic tag when the second electronic tag is used, or shield an electromagnetic field in the vicinity of the second electronic tag when the first electronic tag is used, so that only one of the first and second electronic tags functions.

6. The terminal according to claim 5, wherein the authentication module (302) is further configured to determine whether the authentication information is consistent with user authentication information stored in the terminal; if so, then determine that the authentication succeeds; otherwise, determine that the authentication fails.

7. The terminal according to claim 5, wherein the locking/unlocking module (303) comprises:
a determination unit, which is configured to determine whether the screen of the terminal is unlocked when information received from the electronic tag is locking information; and
an operation unit, which is configured to lock the screen of the terminal when the screen of the terminal is unlocked and to perform no operation when the screen of the terminal is locked.

8. The terminal according to claim 7, wherein
the determination unit (3031) is further configured to determine whether the screen of the terminal is locked when information received from the electronic tag is unlocking information; and
the operation unit (3032) is further configured to unlock the screen of the terminal when the screen of the terminal is locked and to perform no operation when the screen of the terminal is unlocked.

9. The terminal according to any one of claims 5 to 8, wherein the electronic tag is arranged on a personal article of a user, the personal article comprising a ring, a necklace, a key chain and a bracelet.

## Patentansprüche

1. Verfahren zum Verriegeln/Entriegeln eines Bildschirms eines Endgeräts auf Radiofrequenzidentifikations, RFID,-Basis, umfassend:
Empfangen (101), durch das Endgerät, über eine RFID-Lesevorrichtung, von Verriegelungs- oder Entriegelungsinformation, die Authentifizierungsinformation, gesendet von einem externen elektronischen Etikett, trägt,
Durchführen (102) der Benutzeridentitäts-Authentifizierung gemäß der Authentifizierungsinformation; und
Verriegeln oder Entriegeln (103), des Bildschirms des Endgeräts gemäss der Verriegelungs- oder Entriegelungsinformation, nachdem die Authentifizierung erfolgreich ist;
**dadurch gekennzeichnet, dass**
das externe elektronische Etikett ein erstes elektronisches Etikett umfasst, das konfiguriert ist, um die Verriegelungsinformation zu senden, ein zweites elektronisches Etikett, das konfiguriert ist, um die Entriegelungsinformation zu senden, und einen Abschirmteil, der konfiguriert ist, um Funktionen der ersten und zweiten elektronischen Etiketten zu schalten; wobei der Abschirmteil spezifisch konfiguriert ist, um ein elektromagnetisches Feld in der Nähe des ersten elektronischen Etiketts abzuschirmen, wenn das zweite elektronische Etikett verwendet wird, oder ein elektromagnetisches Feld in der Nähe des zweiten elektronischen Etiketts abzuschirmen, wenn das erste elektronische Etikett verwendet wird, so dann nur eines der ersten und zweiten elektronischen Etiketten funktioniert.

2. Verfahren nach Anspruch 1, wobei der Schritt des Durchführens der Benutzeridentitäts-Authentifizierung gemäß der Authentifizierungsinformation Folgendes umfasst:
Bestimmen, ob die Authentifizierungsinformation mit der Benutzerauthentifizierungsinformation übereinstimmt, die im Endgerät gespeichert ist, wenn dies der Fall ist, Bestimmen, dass die Authentifizierung erfolgreich ist; ansonsten Bestimmen, dass die Authentifizierung fehlschlägt.

3. Verfahren nach Anspruch 1, wobei der Schritt des Verriegelns oder Entriegelns des Bildschirms des Endgeräts gemäß der Verriegelungs- oder Entriegelungsinformation Folgendes umfasst:
wenn die Information, die vom elektronischen Etikett empfangen wird, Verriegelungsinformation ist, Bestimmen, ob der Bildschirm des Terminals entriegelt ist;
falls er entriegelt ist, dann Verriegeln des Bildschirms des Endgeräts; ansonsten keine Durchführung eines Vorgangs.

4. Verfahren nach Anspruch 1, wobei der Schritt des Verriegelns oder Entriegelns des Bildschirms des Endgeräts gemäß der Verriegelungs- oder Entriegelungsinformation Folgendes umfasst:
wenn die Information, die vom elektronischen Etikett empfangen wird, Entriegelungsinformation ist, Bestimmen, ob der Bildschirm des Terminals verriegelt ist;
falls er verriegelt ist, dann Entriegeln des Bildschirms des Endgeräts; ansonsten keine Durchführung eines Vorgangs.

5. Endgerät zum Verriegeln/Entriegeln eines Bildschirms eines Endgeräts auf Radiofrequenzidentifikations, RFID,-Basis, umfassend:
ein Empfangsmodul (301), das konfiguriert ist, um über eine RFID-Lesevorrichtung, Verriegelungs- oder Entriegelungsinformation zu empfangen, die Authentifizierungsinformation von einem externen elektronischen Etikett trägt,
ein Authentifizierungsmodule (302), das konfiguriert ist, um eine Benutzeridentitäts-Authentifizierung gemäß der Authentifizierungsinformation durchzuführen; und
ein Verriegelungs-/Entriegelungsmodul (303), das konfiguriert ist, um den Bildschirm des Endgeräts gemäß der Verriegelungs- oder Entriegelungsinformation zu verriegeln oder entriegeln, nachdem die Authentifizierung erfolgreich ist;
**dadurch gekennzeichnet, dass**
das externe elektronische Etikett ein erstes elektronisches Etikett umfasst, das konfiguriert ist, um die Verriegelungsinformation zu senden, ein zweites elektronisches Etikett, das konfiguriert ist, um die Entriegelungsinformation zu senden, und einen Abschirmteil, der konfiguriert ist, um Funktionen der ersten und zweiten elektronischen Etiketten zu schalten; wobei der Abschirmteil spezifisch konfiguriert ist, um ein elektromagnetisches Feld in der Nähe des ersten elektronischen Etiketts abzuschirmen, wenn das zweite elektronische Etikett verwendet wird, oder ein elektromagnetisches Feld in der Nähe des zweiten elektronischen Etiketts abzuschirmen, wenn das erste elektronische Etikett verwendet wird, so dann nur eines der ersten und zweiten elektronischen Etiketten funktioniert.

6. Endgerät nach Anspruch 5, wobei das Authentifizierungsmodul (302) weiter konfiguriert ist, um zu bestimmen, ob die Authentifizierungsinformation mit der Benutzerauthentifizierungsinformation übereinstimmt, die im Endgerät gespeichert ist; wenn dies der Fall ist, Bestimmen, dass die Authentifizierung erfolgreich ist; ansonsten Bestimmen, dass die Authentifizierung fehlschlägt.

7. Endgerät nach Anspruch 5, wobei das Verriegelungs-/Entriegelungsmodul (303) Folgendes umfasst:
eine Bestimmungseinheit, die konfiguriert ist, zu bestimmen, ob der Bildschirm des Endgeräts entriegelt ist, wenn die Information, die vom elektronischen Etikett empfangen wird, Verriegelungsinformation ist; und
eine Vorgangseinheit, die konfiguriert ist, um den Bildschirm des Endgeräts zu verriegeln, wenn der Bildschirm des Endgeräts entriegelt ist, und keinen Vorgang durchzuführen, wenn der Bildschirm des Endgeräts verriegelt ist.

8. Endgerät nach Anspruch 7, wobei
die Bestimmungseinheit (3031) weiter konfiguriert ist, um zu bestimmen, ob der Bildschirm des Endgeräts verriegelt ist, wenn die Information, die vom elektronischen Etikett empfangen wird, Entriegelungsinformation ist; und
die Vorgangseinheit (3032) weiter konfiguriert ist, um den Bildschirm des Endgeräts zu entriegeln, wenn der Bildschirm des Endgeräts verriegelt ist, und keinen Vorgang durchzuführen, wenn der Bildschirm des Endgeräts entriegelt ist.

9. Endgerät nach einem der Ansprüche 5 bis 8, wobei das elektronische Etikett auf einem persönlichen Gegenstand eines Benutzers angeordnet ist, wobei der persönliche Gegenstand einen Ring, eine Halskette, einen Schlüsselanhänger und ein Armband umfasst.

## Revendications

1. Procédé de verrouillage / déverrouillage d'un écran d'un terminal sur la base d'une identification par radiofréquence, RFID, comprenant les étapes ci-dessous consistant à :
recevoir (101), par le terminal, par l'intermédiaire d'un lecteur RFID, des informations de verrouillage / déverrouillage transportant des informations d'authentification envoyées par une étiquette électronique externe ;
mettre en oeuvre (102) une authentification d'identité d'utilisateur selon les informations d'authentification ; et
verrouiller ou déverrouiller (103) l'écran du terminal selon les informations de verrouillage / déverrouillage, suite à la réussite de l'authentification ;
**caractérisé en ce que** :
l'étiquette électronique externe comporte une première étiquette électronique configurée de manière à envoyer les informations de verrouillage, une seconde étiquette électronique configurée de manière à envoyer les informations de déverrouillage, et une partie de protection configurée de manière à commuter les fonctions des première et seconde étiquettes électroniques ; dans lequel la partie de protection est spécialement configurée de manière à protéger un champ électromagnétique au voisinage de la première étiquette électronique lorsque la seconde étiquette électronique est utilisée, ou à protéger un champ électromagnétique au voisinage de la seconde étiquette électronique lorsque la première étiquette électronique est utilisée, de sorte que seule l'une des première et seconde étiquettes électroniques fonctionne.

2. Procédé selon la revendication 1, dans lequel l'étape de mise en oeuvre de l'authentification d'identité d'utilisateur selon les informations d'authentification comprend les étapes ci-dessous consistant à :
déterminer si les informations d'authentification sont compatibles avec les informations d'authentification d'utilisateur stockées dans le terminal ; le cas échéant, déterminer que l'authentification a réussi ; sinon, déterminer que l'authentification a échoué.

3. Procédé selon la revendication 1, dans lequel l'étape de verrouillage ou de déverrouillage de l'écran du terminal selon les informations de verrouillage / déverrouillage comprend les étapes ci-dessous consistant à :
lorsque des informations reçues en provenance de l'étiquette électronique correspondent à des informations de verrouillage, déterminer si l'écran du terminal est déverrouillé ;
s'il est déverrouillé, verrouiller ensuite l'écran du terminal ; sinon, ne mettre en oeuvre aucune opération.

4. Procédé selon la revendication 1, dans lequel l'étape de verrouillage ou de déverrouillage de l'écran du terminal selon les informations de verrouillage / déverrouillage comprend les étapes ci-dessous consistant à :
lorsque des informations reçues en provenance de l'étiquette électronique correspondent à des informations de déverrouillage, déterminer ensuite si l'écran du terminal est verrouillé ;
s'il est verrouillé, déverrouiller ensuite l'écran du terminal ; sinon, ne mettre en oeuvre aucune opération.

5. Terminal destiné à verrouiller / déverrouiller un écran du terminal sur la base d'une identification par radiofréquence, RFID, comprenant :
un module de réception (301) qui est configuré de manière à recevoir, par l'intermédiaire d'un lecteur RFID, des informations de verrouillage / déverrouillage transportant des informations d'authentification en provenance d'une étiquette électronique externe ;
un module d'authentification (302) qui est configuré de manière à mettre en oeuvre une authentification d'identité d'utilisateur selon les informations d'authentification ; et
un module de verrouillage / déverrouillage (303) qui est configuré de manière à verrouiller ou déverrouiller l'écran du terminal selon les informations de verrouillage / déverrouillage, suite à la réussite de l'authentification mise en oeuvre par le module d'authentification ;
**caractérisé en ce que** :
l'étiquette électronique externe comporte une première étiquette électronique configurée de manière à envoyer les informations de verrouillage, une seconde étiquette électronique configurée de manière à envoyer les informations de déverrouillage, et une partie de protection configurée de manière à commuter les fonctions des première et seconde étiquettes électroniques ; dans lequel la partie de protection est spécialement configurée de manière à protéger un champ électromagnétique au voisinage de la première étiquette électronique lorsque la seconde étiquette électronique est utilisée, ou à protéger un champ électromagnétique au voisinage de la seconde étiquette électronique lorsque la première étiquette électronique est utilisée, de sorte que seule l'une des première et seconde étiquettes électroniques fonctionne.

6. Terminal selon la revendication 5, dans lequel le module d'authentification (302) est en outre configuré de manière à déterminer si les informations d'authentification sont compatibles avec des informations d'authentification d'utilisateur stockées dans le terminal ; le cas échéant, à déterminer ensuite que l'authentification à réussi ; sinon, à déterminer que l'authentification a échoué.

7. Terminal selon la revendication 5, dans lequel le module de verrouillage / déverrouillage (303) comprend :
une unité de détermination, qui est configurée de manière à déterminer si l'écran du terminal est déverrouillé lorsque des informations reçues en provenance de l'étiquette électronique correspondent à des informations de verrouillage ; et
une unité d'opération, qui est configurée de manière à verrouiller l'écran du terminal lorsque l'écran du terminal est déverrouillé, et à ne mettre en oeuvre aucune opération lorsque l'écran du terminal est verrouillé.

8. Terminal selon la revendication 7, dans lequel
l'unité de détermination (3031) est en outre configurée de manière à déterminer si l'écran du terminal est verrouillé lorsque des informations reçues en provenance de l'étiquette électronique correspondent à des informations de déverrouillage ; et
l'unité d'opération (3032) est en outre configurée de manière à déverrouiller l'écran du terminal lorsque l'écran du terminal est verrouillé, et à ne mettre en oeuvre aucune opération lorsque l'écran du terminal est déverrouillé.

9. Terminal selon l'une quelconque des revendications 5 à 8, dans lequel l'étiquette électronique est agencée sur un article personnel d'un utilisateur, l'article personnel comprenant une bague, un collier, une chaîne porte-clés et un bracelet.
